# EUROPÄISCHE PATENTSCHRIFT

(11) **EP 3 098 276 B1**
(45) Veröffentlichungstag und Bekanntmachung des Hinweises auf die Patenterteilung: **07.07.2021**
(21) Anmeldenummer: 16171515.6
(22) Anmeldetag: 26.05.2016
(51) Int. Cl.: C09J 5/00, B62D 27/02

(54) **FÜGEVERFAHREN**
JOINING METHOD
PROCÉDÉ DE JOINTOYAGE

(30) Priorität: 27.05.2015 DE 102015209685
(43) Veröffentlichungstag der Anmeldung: 30.11.2016
(73) Patentinhaber: Volkswagen Aktiengesellschaft, 38440 Wolfsburg (DE)
(72) Erfinder: Süllentrop, Sebastian, 59556 Lippstadt-Lohe (DE)

(56) Entgegenhaltungen:
- EP-A2- 1 375 008
- WO-A1-98/51405
- DE-A1- 10 347 652

## Beschreibung

Die Erfindung betrifft ein Fügeverfahren zur Herstellung einer Bauteilverbindung nach dem Oberbegriff des Patentanspruches 1.

Im Automobilbau erfolgt die Herstellung einer Fahrzeug-Karosserie in einer vollautomatisierten Prozesskette. Speziell bei Leichtbaustrukturen können unterschiedliche Werkstoffe, exemplarisch ein Faserverbundkunststoff-Bauteil und ein Metall-Blechteil verwendet werden. Diese können anschließend unter Bildung einer Mischbauweise mit einer Klebeverbindung zusammengefügt werden. Die so gebildete Mischbau-Struktur wird in der Regel einem KTL-Prozess zugeführt, um dessen Korrosionsbeständigkeit zu garantieren.

Bei einem Klebe-Fügeverfahren werden in gängiger Praxis als Klebstoffe ein 1-Komponenten-System eingesetzt. Bei Verwendung eines 1-Komponenten-Systems wird die thermisch oder chemisch aktivierbare Klebstoff-Ausgangskomponente (zum Beispiel ein Harzmonomer) vom Zulieferer bereits gebrauchsfertig mit beigemischtem Härter in einem gemeinsamen Klebstoff-Reservoir bereitgestellt, und zwar mit vordosierten Additiven zur Einstellung von Klebstoff-Kennwerten, zum Beispiel einer Klebstoff-Duktilität, -Steifigkeit, -Leitfähigkeit - Lichtempfindlichkeit, -Klebrigkeit oder -Fließfähigkeit. Der Härter kann bei Raumtemperatur unlöslich sein und durch Zuführung von Reaktionswärme die Härtungsreaktion einleiten. Beispielhaft erfolgt die Härtung in einem Temperaturbereich von 130° bis 220°, und zwar gegebenenfalls im prozesstechnisch nachgeschalteten KTL-Ofen.

In Abgrenzung dazu sind bei Verwendung eines 2-Komponenten-Systems die flüssige Klebstoff-Ausgangskomponente und der Härter jeweils in räumlich voneinander getrennten Reservoirs vorgehalten. In diesem Fall werden die Klebstoff-Ausgangskomponente und der Härter während der Klebstoff-Applikation in einem zur Applizierdüse geführten Zuleitungssystem miteinander intensiv durchmischt.

Bei dem 2-Komponenten-Klebstoffsystem kommen daher der Härter und die Klebstoff-Ausgangskomponente erst stromab der Reservoirs miteinander in Kontakt. Mit dem Kontakt von Harz und Härter startet die chemische Reaktion zum Klebstoffpolymer, so dass die Verarbeitungs-Zeitdauer des 2-Komponenten-Klebstoffsystems im Vergleich zum 1-Komponenten-Klebstoffsystems vergleichsweise gering ist.

In einem gattungsgemäßen Fügeverfahren sind die beiden Fügepartner an einer Klebnaht zusammengefügt, die zumindest einen Klebstoffkennwert, etwa die Duktilität oder die Steifigkeit, aufweist, dessen Größe über eine Klebnaht-Applikationslänge in Abhängigkeit von variierenden Anforderungen variiert. Beispielhaft können sich innerhalb der Klebnaht lokal unterschiedliche Anforderungen ergeben, und zwar aufgrund unterschiedlicher fertigungsbedingter Belastungen, wie etwa Toleranzen, oder unterschiedlicher Ausdehnungskoeffizienten der Fügepartner. Darüber hinaus sind auch später betriebsbedingt auftretende Last-Situationen zu berücksichtigen, die durch unterschiedliche Krafteinleitungspunkte, Auflager oder Lastamplituden örtlich variieren. Die Klebnaht wird im gattungsgemäßen Fügeverfahren durch einen Klebstoff gebildet, der bevorzugt ein 1-Komponenten-System ist.

Im Hinblick auf die oben dargelegten variierenden Anforderungsprofile sind die Kennwerte in der Klebnaht entsprechend anzupassen. Dies erfolgt im Stand der Technik durch Verwendung unterschiedlicher Klebstoffe in der Klebnaht, was jedoch fertigungstechnisch aufwendig und entsprechend kostspielig ist.

Aus der DE 10 2009 039 029 A1 ist ein Verfahren zum Fügen von mindestens zwei Bauteilen unter Verwendung einer dualhärtenden Klebstoffzusammensetzung bekannt. Aus der WO 2014/078883 A2 ist eine Mischanlage für viskose Medien bekannt.

Aus der DE 103 47 652 A1 ist ein gattungsgemäßes Fügeverfahren zur Herstellung einer Bauteilverbindung bekannt. Die beiden Fügepartner der Bauteilverbindung weisen unterschiedliche Materialien auf. Aus der DE 10 2013 107 849 A1 ist ein Verfahren zum Herstellen einer Faserverbundstruktur aus mindestens zwei getrennten Faserverbund-Bauteilen bekannt, die an einer Fügestelle durch eine Klebeverbindung stofflich zusammengefügt werden.

Die Aufgabe der Erfindung besteht darin, ein Fügeverfahren bereitzustellen, bei der in fertigungstechnisch einfacher Weise die Kennwerte der Klebnaht entsprechend variierender Anforderungen anpassbar sind.

Die Aufgabe ist durch die Merkmale des Patentanspruches 1 gelöst. Bevorzugte Weiterbildungen der Erfindung sind in den Unteransprüchen offenbart.

Gemäß dem Patentanspruch 1 wird die Klebnaht zwischen den beiden Fügepartnern nicht mehr durch unterschiedliche Klebstoffe mit entsprechend variierenden Kennwerten gebildet, sondern wird vielmehr während des Applikationsvorgangs eines einzigen Klebstoffes der jeweilige Additiv-Anteil in der zu applizierenden Klebstoff-Ausgangskomponente variiert. Auf diese Weise können die Verbindungseigenschaften der Klebnaht in einfacher Weise optimiert und lokal eingestellt werden. Zudem ist eine Verarbeitung eines Grundklebstoffsystems für alle unterschiedlichen Anforderungen ermöglicht. Das erfindungsgemäße Fügeverfahren erlaubt außerdem eine außerordentlich hohe Fertigungsflexibilität sowie eine einfache und einheitliche Anlagentechnik.

Zudem können im Vergleich zu einem dual härtenden System die Klebstoffkosten reduziert werden. Bei einem dual härtenden System kann lokal "nach- bzw. vorgehärtet" werden, um lokal die Kennwerte einzustellen.

Die Erfindung ist nicht nur auf den Automobilbau beschränkt, sondern in sämtlichen Branchen und Industriezweigen anwendbar, die Klebstoffe für strukturelle Anwendungen verarbeiten, zum Beispiel in der Energietechnik, der Schifffahrtstechnik, der Luft- und Raumfahrt, dem Flugzeugbau, dem klassischen Maschinenbau sowie der Sport- und Freizeitindustrie.

Nachfolgend werden weitere Erfindungsaspekte beschrieben: So weist die Appliziereinheit zumindest ein oder mehrere Additiv-Reservoirs und separat davon ein Klebstoff-Reservoir für die Klebstoff-Ausgangskomponente auf. Die bevorzugt als 1-Komponenten-System ausgeführte Klebstoff-Ausgangskomponente kann thermisch oder chemisch aktivierbar sein und bevorzugt ein Binder oder ein Harzmonomer sein, das bereits einen beigemischten Härter enthält. Mittels des Härters wird zum Beispiel bei Beaufschlagung mit Reaktionswärme die Aushärtereaktion gestartet. Bevorzugt kann der Härter als Bestandteil der Klebstoff-Ausgangskomponente im Klebstoff-Reservoir gebrauchsfertig bereitgestellt sein. Die Klebstoff-Ausgangskomponente ist geeignet bereits für sich alleine zumindest nach dem Aushärten eine dauerhafte durch Klebung erzeugte Bauteilverbindung bereit zu stellen. Mit anderen Worten ist zur Erzeugung einer Klebenaht die Klebstoff-Ausgangskomponente ausreichend, die durch eine 100%-Dosierung aus dem Klebstoff-Reservoir erfolgt. Diese Klebenaht auf Basis der Klebstoff-Ausgangskomponente erzeugt bereits eine dauerhafte Bauteilverbindung.

Das Additiv-Reservoir und das Klebstoff-Reservoir sind über ein Zuleitungssystem mit der Applizierdüse strömungstechnisch verbunden, die während des Appliziervorgangs entlang einer Applizierrichtung über eine vorgegebene Klebnaht-Applikationslänge den Klebstoff auf den Fügepartner aufträgt. Der Appliziervorgang erfolgt bevorzugt so, dass sich die Klebnaht über die Applizierlänge durchgängig sowie unterbrechungsfrei erstreckt. Entsprechend wird auch der oben skizzierte Appliziervorgang über die Applizierlänge bevorzugt mit durchgängiger kontinuierlicher, das heißt unterbrechungsfreier Applikation der Klebstoff-Ausgangskomponente durchgeführt.

In einer technischen Umsetzung der Erfindung weist das Zuleitungssystem eine Klebstoff-Dosiereinheit auf, mit der die zur Applikationsdüse geführte Klebstoff-Ausgangskomponente dosierbar ist. Die Klebstoff-Dosiereinrichtung kann im Hinblick auf eine exakte Dosierung unmittelbar in der, der Hauptleitung vorgelagerten Klebstoff-Teilleitung angeordnet sein. In einer bevorzugten technischen Realisierung kann die Klebstoff-Dosiereinheit und/oder die Additiv-Dosiereinheit als zum Beispiel drehzahlgeregelte Dosiereinrichtungen als Zahnraddosierer oder Schneckenraddosierer ausgeführt sein. Darüber lässt sich eine besonders exakte Zugabe des Additivs einstellen.

Besonders bevorzugt wird die chemische Zusammensetzung der Klebstoff-Ausgangskomponente über die Applikationslänge der Klebnaht konstant gehalten. Mit anderen Worten bleibt das Gewichtsverhältnis der chemischen Elemente der Klebstoff-Ausgangskomponente zueinander konstant, d. h. innerhalb üblicher herstellungstechnischer Toleranzschwankungen. Dabei kann das Klebstoff-Reservoir zusätzlich zur Klebstoff-Ausgangskomponente noch zumindest ein Additiv enthalten. Ob diese Substanz ein Additiv ist, lässt sich eindeutig durch Vergleich mit einem Additiv-Reservoir feststellen. Im Additiv-Reservoir liegt diese Substanz im Gegensatz zur Klebstoff-Ausgangskomponente bzw. zum Inhalt des Klebstoff-Ausgangskomponente Reservoirs in einem anderen prozentualen Gewichtsverhältnis im Reservoir vor. Das Additiv hat im Klebstoff-Reservoir den niedrigsten Gewichtsanteil und bildet somit ein Additiv-Basisniveau. Von dem Inhalt des Klebstoff-Reservoir muss somit das Additiv abgezogen werden, um auf die Klebstoff-Ausgangskomponente zu kommen.

In einer weiteren Ausgestaltung der Erfindung variiert der Additiv-Anteil im Mischer bzw. entlang der Klebenaht in Sprüngen um mindestens 1 Gew.%, bevorzugt um mindestens 3 Gew.%, besonders bevorzugt um mindestens 5 Gew.%, bezogen auf das Gesamtgewicht aus Klebstoff-Ausgangskomponente und Additiv-Anteil. Dabei ist unter Klebenaht-Sprung bzw. Klebenaht-Eigenschaftssprung eine prozentuale Gewichtsänderung im Additivanteil bezogen auf das Gesamtgewicht der Klebenaht in diesem Abschnitt bzw. des Klebstoffs zu verstehen. Dabei ist unter Sprung nicht nur eine rechteckförmige, quasi digitale Änderung des Additiv-Anteils zu verstehen, sondern auch eine fertigungstechnisch bedingte oder bewusst gewollte kontinuierliche Änderung. Die Änderung erstreckt sich aber üblicherweise maximal über 2 cm der Applizierlänge. Besonders bevorzugt beinhaltet deshalb das Additiv-Reservoir mindestens 5 Gew.%, bevorzugt mindestens 10 Gew.%, besonders bevorzugt mindestens 30 Gew.%, des Additivs. Dabei kann der übrige Gewichtsanteil des Additiv-Reservoirs durch die Klebstoff-Ausgangskomponente gebildet werden. Die Klebstoff-Ausgangskomponente hat wiederum die gleiche chemische bzw. stöchiometrische Zusammensetzung wie die Klebstoff-Ausgangskomponente im Klebstoff-Reservoir. Ein Zumischen aus dem Additiv-Reservoir verändert somit nicht die Klebstoff-Ausgangskomponente bzw. die chemische Zusammensetzung der Klebstoff-Ausgangskomponente. Versuche haben gezeigt, dass ein Anteil an der Klebstoff-Ausgangskomponente im Additiv-Reservoir als sogenannte Trägersubstanz von Vorteil ist, um das homogene Einmischen des Additivs zu erleichtern.

Besonders bevorzugt ist in der Steuereinheit eine Soll-Klebenaht mit mindestens einem Klebenaht-Eigenschaftssprung entlang der Applizierlänge I gespeichert. Dabei ist unter Klebenaht-Eigenschaftssprung eine prozentuale Gewichtsänderung im Additivanteil bezogen auf das Gesamtgewicht der Klebenaht in diesem Abschnitt bzw. des Klebstoffs zu verstehen. Weiterhin wird die Ist-Position der Applizierdüse zum Auftragen der Klebenaht erfasst und in der Steuereinheit mit der gespeicherten Soll-Klebenaht-Position abgeglichen. Weiterhin wird u. a. die Klebstoffauftragsgeschwindigkeit, die Klebstoffaustragungsgeschwindigkeit an der Applizierdüse und die Wegstrecke von der Additiv-Dosiereinheit bis zur Applizierdüse erfasst bzw. sind in der Steuereinheit abgelegt. Dies ermöglich ein Ansteuern der Additiv-Dossiereinheit zeitlich vor Erreichen des Eigenschaftssprung durch die Applizierdüse entlang der Applizierlänge. Da Versuche gezeigt haben, dass der Mischprozess zeitintensiv ist, um ein möglichst homogenes, gleichmäßiges Mischergebnis zu erreichen, müssen die Dosiereinheiten zeitlich spürbar vor dem Erreichen des gewünschten Klebenaht-Eigenschaftssprung entlang der Applizierlänge I angesteuert werden. Bevorzugt erfolgt die Ansteuerung der Dosiereinheiten mindestens 1 s bzw. 2 s, besonders bevorzugt mindestens 5 s, vor Erreichen des gewünschten Klebenaht-Eigenschaftssprung entlang der Applizierlänge I.

Eine weitere Ausgestaltung der Erfindung sieht vor, dass mindestens zwei Additiv-Reservoirs, besonders bevorzugt mindestens 4 Additiv-Reservoirs, mit unterschiedlichen Additiven vorgesehen sind. Die Additive sind aus der Gruppe, die gebildet ist durch Flexibilatoren oder Festigkeitserhöher, elektrisch leitende Substanz, Treibmittel oder Haftvermittler ausgewählt. Flexibilatoren oder Festigkeitserhöher verändern ausgehend von der Klebstoff-Ausgangskomponente die mechanischen Eigenschaften, wobei die Flexibilatoren die Gegenspieler der Festigkeitserhöher sind. Unter mechanischen Eigenschaften wird die Dehnfähigkeit, Steifigkeit und/oder Festigkeit verstanden. Ein Additiv einer elektrisch leitenden Substanz weist eine Leitfähigkeit von mindestens 1 x 10⁻³ S/m, besonders bevorzugt von mindestens 1 x 10³ S/m, auf, beispielhaft sei hier Kupfer, Graphit oder Silber als Partikel aufgeführt. Unter Treibmittel zur Expansion des Klebstoffs bzw. der Klebstoff-Ausgangskomponente sind Additive zu verstehen die Gase bei einer Temperaturerhöhung der Klebstoff-Ausgangskomponente insbesondere im KTL-Ofen freisetzten. Damit können insbesondere applikationsbereichs- oder bauteilchargenabhängige Toleranzen ausgeglichen werden. Die Haftvermittler verbessern die Haftung und/oder Altersstabilität der Klebstoffe auf unpolaren Oberflächen, beispielhaft seien hier Silane genannt.

In einer bevorzugten Ausgestaltung liegt die Klebstoff-Ausgangskomponente im Klebstoff-Reservoir als Granulat vor. Das Granulat wird vor oder im dynamischen Mischer erwärmt und liegt somit an der Applizierdüse als flüssige oder pastöse Klebstoff-Ausgangskomponente vor. Wie bereits eingangs erwähnt, kann das Granulat der Klebstoff-Ausgangskomponente bereits den Basisanteil bzw. das Basisniveau an zumindest einem Additiv enthalten. Da das Granulat über größere Distanzen wirtschaftlich transportiert werden kann, kann ein Klebstoff-Reservoir für mehrere Appliziereinheiten eingesetzt werden. Das gleiche Granulat-Reservoir kann somit als Basis für verschiedene Appliziereinheiten dienen.

Im Hinblick auf die Applikation eines einwandfreien Klebstoff-Gemisches kann das Zuleitungssystem einen Mischer aufweisen. Der Mischer ist bevorzugt stromab der oben erwähnten Knotenstelle positioniert, um das zudosierte Additiv in der Klebstoff-Ausgangskomponente homogen einzumischen. Besonders bevorzugt wird ein dynamischer Mischer, um eine konstante Mischgüte in kurzer Zeit zu realisieren.

Zur Prozessautomation ist die Additiv-Dosiereinheit und die Klebstoff-Dosiereinheit in einem Steuer-/Regelkreis als Stellglieder eingebunden. Die beiden Dosiereinheiten sind über eine elektronische Steuereinheit ansteuerbar, und zwar auf der Grundlage eines manuell oder automatisch vorgebbaren Kennwert-Sollwertes.

Zusammenfassend betrifft also die Erfindung generell ein Verarbeitungssystem für 1-Komponenten-Klebstoffe zur flexiblen Einstellung von Klebstoff-Kennwerten. In dem Verarbeitungssystem wird der zumindest eine Klebstoff-Kennwert über das Verhältnis von Klebstoff-Ausgangskomponente und zumindest einer Additiv-Kennwert-Größe eingestellt. Dabei wird das Verhältnis von Klebstoff-Ausgangskomponente und dem zumindest einen Additiv direkt, und zwar während des Applikationsprozesses kontinuierlich zur lokalen Einstellung der Klebstoff-Kennwerte eingestellt, und zwar bezogen auf die lokalen Verbindungsanforderungen an der Klebstoffnaht bzw. für die Bauteilverbindung aus zwei unterschiedlichen Blechen, wobei ein Faserverbundkunststoff-Bauteil ein sogenanntes Organo-Blech darstellt.

Anstelle eines reinen Additives kann gegebenenfalls auch eine pastöse Klebstoff-Additiv-Mischung mit hohem Additiv-Anteil der Klebstoff-Ausgangskomponente zudosiert werden, um den Gesamt-Additiv-Anteil und damit die Klebstoff-Kennwerte einzustellen. Erfindungsgemäß kann somit mit nur einer einzigen Applikationseinheit sowie einer einzigen Klebstoff-Ausgangskomponente ein oder mehrere Klebstoff-Kennwerte flexibel eingestellt werden.

Eine solche flexible Klebstoff-Kennwert-Einstellung ist insbesondere in einer Verbindungsanordnung von Relevanz, in der während des Fertigungsprozesses die Verbindungsanordnung durch unterschiedliche Wärmeausdehnungskoeffizienten stark belastet wird. Derartige Bereiche können mit einem Klebstoff hoher Duktilität gefügt werden. In der selben Klebnaht können dagegen andere Füge-Bereiche mit hoher Steifigkeit verbunden werden.

Als Additiv können beispielhaft Polyamide genutzt werden, wobei auch andere Additive beliebiger Art denkbar sind. Die Förder- sowie Dosier- und Mischeinheiten können in Anlehnung an die aus dem Stand der Technik genutzten Baugruppen für die Verarbeitung eines 2-Komponenten-Klebstoffsystems zusammengestellt werden. Zur Handhabung des Systems ist bevorzugt eine robotergesteuerte Verarbeitung vorgesehen. Zusätzlich können auch mehrere Additiv-Komponenten und deren Verhältnisse variiert werden. Dieses Konzept gilt für sämtliche Klebstoff-Arten, das heißt PUR, EP, ACR, etc. Wie oben angedeutet, ist die Verarbeitung in Bezug auf die Additivmodifikation auf 1-Komponenten-Klebstoffe beschränkt.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer schematischen Seitenschnittdarstellung eine Bauteilverbindung;
- Fig. 2: eine Ansicht, in der das Fügeverfahren sowie die Fügevorrichtung erläutert sind; und
- Fig. 3: in einer Ansicht entsprechend der Fig. 2 ein zweites Ausführungsbeispiel der Erfindung.

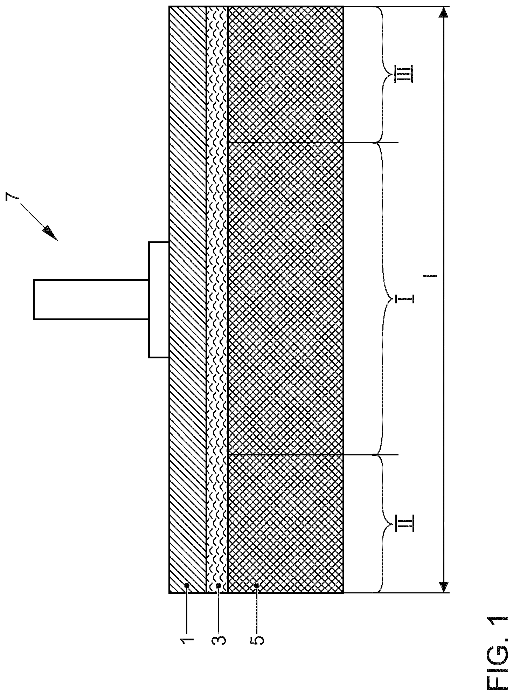

In der Fig. 1 ist eine Bauteilverbindung gezeigt, bei dem exemplarisch ein Aluminium-Blechteil 1 an einer Klebnaht 3 mit einem Faserverbundkunststoff-Bauteil 5 zusammengefügt sind. Das Aluminium-Blechteil 1 weist oberseitig eine Krafteinleitungsstelle 7 auf, die in der Fig. 1 beispielhaft als ein am Blechteil 1 angebundener Schraubbolzen ausgeführt ist. In der Einbaulage kann über die Krafteinleitungsstelle 7 eine betriebsbedingte Last mit gegebenenfalls vorhandener Lastamplituden in die Bauteilverbindung eingeleitet werden.

Wie aus der Fig. 1 weiter hervorgeht, erstreckt sich die Klebnaht 3 über eine Applizierlänge I durchgängig unterbrechungsfrei. Aufgrund ein betriebsbedingten Lasteinleitung an der Krafteinleitungsstelle 7 ergeben sich an die Klebnaht 3 unterschiedliche Verbindungs-Anforderungen über die Applizierlänge I. Um den unterschiedlichen Verbindungs-Anforderungen gerecht zu werden, ist die Klebnaht 3 in der Fig. 1 exemplarisch in einen mittleren Applikationsabschnitt I sowie in seitliche Applikationsabschnitte II, III aufgeteilt. Der mittlere, in der Vertikalrichtung in Flucht zum Krafteinleitungspunkt 7 liegende Applikationsbereich I ist aufgrund betriebsbedingt eingeleiteter Schwingungen mit einem duktilen Klebstoff realisiert, um eine Dämpfungswirkung zu ermöglichen. Demgegenüber sind die seitlich äußeren Bereiche II, III mit einem Klebstoff geringerer Duktilität ausgeführt, um die Verbindungssteifigkeit zu steigern. Alternativ und/oder zusätzlich können sich auch lokal unterschiedliche Verbindungsanforderungen an die Klebnaht ergeben, die in Bauteiltoleranzen oder in unterschiedlichen Ausdehnungskoeffizienten der Fügepartner 1, 5 begründet sind.

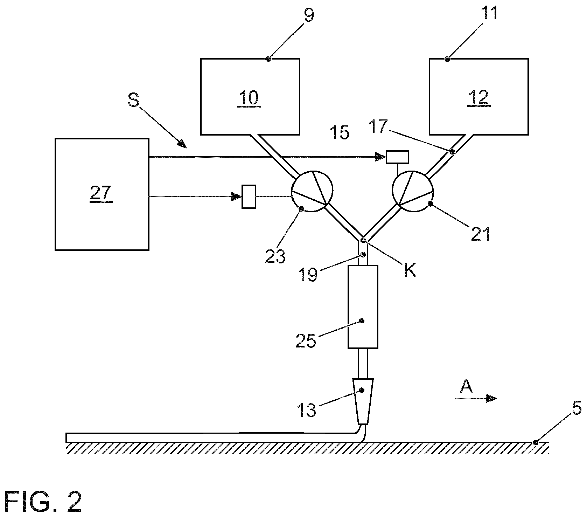

Die Klebnaht 3 weist in den Applikationsbereichen I bis III daher unterschiedliche Duktilitäts-Kennwerte auf, deren Größe entsprechend der oben dargelegten Verbindungsanforderungen variieren. Zum Variieren des Duktilitäts-Kennwertes über die Applikationslänge I wird während des nachfolgend anhand der Fig. 2 beschriebenen Applikationsprozesses der Additiv-Anteil in der aufzutragenden Klebstoff-Ausgangskomponente 12 variiert.

Gemäß der Fig. 2 weist die Appliziereinheit ein Additiv-Reservoir 9 und ein Klebstoff-Reservoir 11 auf. Die beiden Reservoirs 9, 11 sind voneinander räumlich getrennt und über ein Zuleitungssystem mit einer Applizierdüse 13 strömungstechnisch verbunden, über die die Klebstoff-Ausgangskomponente 12 auf das Faserverbundkunststoff-Bauteil 3 appliziert wird. In der Fig. 2 weist das Zuleitungssystem eine jeweils vom Additiv-Reservoir 9 und vom Klebstoff-Reservoir 11 wegführende Teilleitung 15, 17 auf. Die beiden Teilleitungen 15, 17 sind an einer Knotenstelle K zusammengeführt und münden dort in eine Hauptleitung 19, die zur Applizierdüse 13 führt. In den beiden Teilleitungen 15, 17 ist jeweils eine Klebstoff-Dosiereinheit 21 und eine Additiv-Dosiereinheit 23 angeordnet. Zudem ist in der Hauptleitung 19 ein Mischer 25 vorgesehen.

Die beiden Dosiereinheiten 21, 23 sind zum Beispiel als drehzahlgeregelte Dosierpumpen ausgeführt, die als Stellglieder in einem Regelkreis und/oder Steuerkreis S eingebunden sind. Der Regelkreis S weist eine elektronische Steuereinheit 27 auf, mittels der die beiden Dosierpumpen 21, 23 während des Applikationsprozesses ansteuerbar sind, um den Additiv-Anteil der auf das Bauteil 5 zu applizierenden Klebstoff-Ausgangskomponente 12 in Abhängigkeit von Verbindungs-Anforderungen zu variieren.

In der Fig. 2 ist die im Klebstoff-Reservoir 11 gelagerte Klebstoff-Ausgangskomponente ein thermisch oder chemisch aktivierbares 1-Komponenten-Klebstoffsystem, und zwar bevorzugt ein Binder oder ein Harzmonomer, der mit einem Härter durchmischt ist, mittels dem die Klebstoff-Ausgangskomponente 12 bei thermischer/chemischer Aktivierung in einer Aushärtereaktion aushärtet. Die in den beiden Teilleitungen 15, 17 geführten Massenströme werden in dem Mischer 25 homogen durchmischt und anschließend über die Applizierdüse 13 aufgetragen, und zwar über die Applizierlänge I durchgängig, das heißt kontinuierlich oder unterbrechungsfrei mit unterschiedlichen Additiv-Anteilen, um die in der Fig. 1 angedeuteten Applikationsbereiche I, II, III mit jeweils einem Klebeenaht-Eigenschaftssprung 29 zwischen den Applikationsbereichen I, II und II, III in der Klebnaht 3 darzustellen. Die Appliziereinheit bewegt sich dabei während des Applikationsprozesses entlang einer vorgegebenen Applikationsrichtung A.

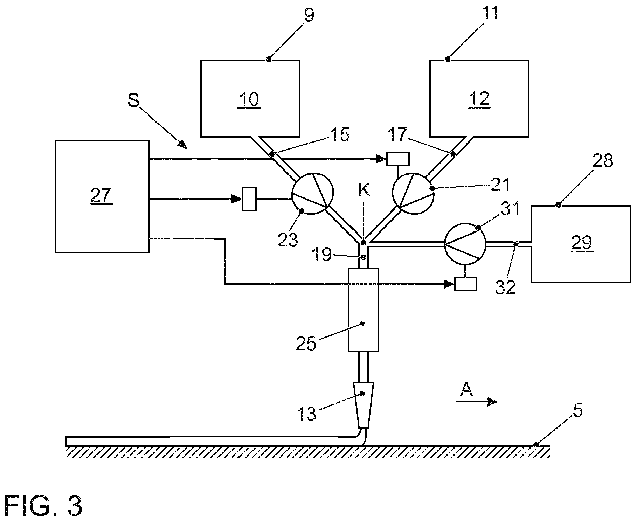

In Abgrenzung zur Fig. 2 wird in der Fig. 3 nicht nur ein Additiv-Reservoir 9 verwendet, sondern ein weiteres Additiv-Reservoir 28, bei dem die unterschiedlichen Additive jeweils in räumlich voneinander getrennten Reservoirs 9, 28 vorgehalten sind. Dabei steht das Additiv-Reservoir 28 als Platzhalter für mögliche weitere Additiv-Reservoirs. Das System ist jederzeit um weitere Additiv-Reservoirs erweiterbar. Beispielsweise ist in dem Additiv-Reservoir 9 ein Additiv 10 zur Einstellung der Festigkeit und in dem Additiv-Reservoir 28 ein Additiv 29 zur Einstellung der elektrischen Leitfähigkeit enthalten. In Bereichen, in denen eine besonders hohe Festigkeit erreicht werden soll, wird während der Klebstoff-Applikation die elektrisch leitende Substanz 29 mittels der Additiv-Dosiereinheit 31 der Knotenstelle K zugeführt, wobei die Additiv-Dosiereinheit 31 in der Additiv-Teilleitung 32 angeordnet ist. An diesen Stellen der Bauteilverbindung kann dann in einem nachfolgenden Prozessschritt ein Schweißpunkt gesetzt werden. Stromab der Knotenstelle K werden die Klebstoff-Ausgangskomponente 12, das Additiv 10 und das Additiv 29 im Mischer 25 des zur Applizierdüse 13 geführten Zuleitungssystems miteinander intensiv durchmischt. Somit wird dann zusätzlich zu den Schweißpunkten die Festigkeit des Klebstoffs in diesem Applikationsbereich erhöht.

### Bezugszeichenliste

- 1: Aluminium-Blechteil
- 3: Klebenaht
- 4: Soll-Klebenaht
- 5: Faserverbundkunststoff-Bauteil
- 7: Krafteinleitungsstelle
- 9: Additiv-Reservoir
- 10: Additiv
- 11: Klebstoff-Reservoir
- 12: Klebstoff-Ausgangskomponente
- 13: Applizierdüse
- 15: Teilleitung des Additivs
- 17: Teilleitung des Klebstoffs
- 19: Hauptleitung
- 21: Klebstoff-Dosiereinheit
- 23: Additiv-Dosiereinheit
- 25: Mischer
- 26: Klebenaht-Eigenschaftssprung
- 27: Steuereinheit
- 28: Additiv-Reservoir
- 29: Elektrisch leitende Substanz
- 31: Additiv-Dosiereinheit
- 32: Teilleitung des Additivs
- K: Knotenpunkt
- S: Regelkreis
- I: Applizierlänge
- A: Applikationsrichtung

## Patentansprüche

1. Fügeverfahren zur Herstellung einer Bauteilverbindung, bei dem die Fügepartner (1, 5) an einer Klebnaht (3) zusammengefügt sind, die zumindest einen Klebstoffkennwert, das heißt Duktilität oder Steifigkeit, aufweist, dessen Größe über eine Klebnaht-Applikationslänge (I) in Abhängigkeit von variierenden Anforderungen variiert, wobei mittels einer Appliziereinheit eine flüssige oder pastöse Klebstoff-Ausgangskomponente (12) auf zumindest einen Fügepartner (1, 5) über die Applikationslänge (I) appliziert wird, **dadurch gekennzeichnet, dass** die Appliziereinheit ein Klebstoff-Reservoir (11) für die Klebstoff-Ausgangskomponente (12) und separat davon mindestens ein Additiv-Reservoir (9, 28) aufweist, wobei die Klebstoff-Ausgangskomponente (12) geeignet ist bereits für sich alleine zumindest nach dem Aushärten eine dauerhafte durch Klebung erzeugte Bauteilverbindung bereit stellen zu können und wobei die Reservoirs (11, 9, 28) über ein Zuleitungssystem mit einer Applizierdüse (13) zum Applizieren des Klebstoffes strömungstechnisch verbunden sind, und dass das Zuleitungssystem eine Additiv-Dosiereinheit (23) aufweist, mittels der das Additiv (10) der zur Applizierdüse (13) geführten Klebstoff-Ausgangskomponente (12) zudosierbar ist, und dass die Additiv-Dosiereinheit (23) und die Klebstoff-Dosiereinheit (21) in einem Regelkreis (S) als Stellglieder eingebunden sind, und dass die Dosiereinheit (21, 23) über eine elektronische Steuereinheit (27) automatisch ansteuerbar ist zum Variieren des Klebstoffkennwerts über die Applikationslänge (I) der Klebnaht (3) während des Applikationsvorgangs durch die Variation des Additiv-Anteils in der Klebstoff-Ausgangskomponente (12).

2. Fügeverfahren nach Anspruch 1, **dadurch gekennzeichnet, dass** die chemische Zusammensetzung der Klebstoff-Ausgangskomponente (12) über die Applikationslänge (I) der Klebnaht (3) konstant ist.

3. Fügeverfahren nach Anspruch 1 oder 2, **dadurch gekennzeichnet, dass** der Additiv-Anteil entlang der Klebenaht (3) in Sprüngen um mindestens 0,5 Gew.% bezogen auf das Gesamtgewicht aus Klebstoff-Ausgangskomponente (12) und Additiv-Anteil variiert.

4. Fügeverfahren nach einem der vorhergehenden Ansprüche, **dadurch gekennzeichnet, dass** in der Steuereinheit (27) eine Soll-Klebenaht (4) mit mindestens einem Klebenaht-Eigenschaftssprung entlang der Applizierlänge I abgelegt ist und dass die Ist-Position der Applizierdüse (13) zum Auftragen der Klebenaht (3) erfasst wird und in der Steuereinheit (27) mit der Soll-Klebenaht (4) abgeglichen wird und dass die Dossiereinheit (21, 23) zeitlich vor Erreichen des Eigenschaftssprung durch die Applizierdüse (13) angesteuert wird.

5. Fügeverfahren nach einem der vorhergehenden Ansprüche, **dadurch gekennzeichnet, dass** mindestens zwei Additiv-Reservoirs (9, 28) mit unterschiedlichen Additiven (10, 29) vorgesehen sind wobei die Additive (10, 29) aus der Gruppe von
- Flexibilatoren oder Festigkeitserhöher
- Elektrisch leitende Substanz
- Treibmittel
- Haftvermittler
ausgewählt sind.

6. Fügeverfahren nach einem der vorhergehenden Ansprüche, **dadurch gekennzeichnet, dass** das Additiv-Reservoir (9, 28) einen Additiv-Anteil von mindestens 5 Gew.%, besonders bevorzugt von mindestens 10 Gew.%, enthält, wobei die Klebstoff-Ausgangskomponente (12) den restlichen Gewichtsanteil als Trägerkomponente des Additivs stellt.

7. Fügeverfahren nach einem der vorhergehenden Ansprüche, **dadurch gekennzeichnet, dass** die Klebstoff-Ausgangskomponente (12) im Klebstoff-Reservoir (11) als Granulat vorliegt

8. Fügeverfahren nach Anspruch 1, **dadurch gekennzeichnet, dass** das Zuleitungssystem vom Additiv-Reservoir (9, 28) und vom Klebstoff-Reservoir (11) wegführende Additiv- und Klebstoff-Teilleitungen (15, 17, 32) aufweist, die an einer Knotenstelle (K) zusammengeführt sind und in eine Hauptleitung (19) münden, die zur Applizierdüse (13) geführt ist, und dass die Additiv-Dosiereinheit (23, 32) in der Additiv-Teilleitung (15, 32) angeordnet ist.

9. Fügeverfahren nach einem der vorhergehenden Ansprüche, **dadurch gekennzeichnet, dass** das Zuleitungssystem eine Klebstoff-Dosiereinheit (21) zur Dosierung der Klebstoff-Ausgangskomponente (12) aufweist, und dass insbesondere die Klebstoff-Dosiereinheit (21) in der Klebstoff-Teilleitung (17) angeordnet ist.

10. Fügeverfahren nach einem der vorhergehenden Ansprüche, **dadurch gekennzeichnet, dass** das Zuleitungssystem einen dynamischen Mischer (25) aufweist, in dem das zudosierte Additiv (10) und die Klebstoff-Ausgangskomponente (12) durchmischt werden, und dass insbesondere der dynamische Mischer (25) in der Hauptleitung (19) angeordnet ist.

11. Fügeverfahren nach einem der vorhergehenden Ansprüche, **dadurch gekennzeichnet, dass** die Klebstoff-Ausgangskomponente (12) ein 1-Komponenten-System ist, das thermisch oder chemisch aktivierbar ist.

12. Fügeverfahren nach einem der vorhergehenden Ansprüche, **dadurch gekennzeichnet, dass** sich die Klebnaht (3) über die Applizierlänge (I) durchgängig und unterbrechungsfrei erstreckt, und/oder dass der Appliziervorgang über die Applizierlänge (I) mit durchgängiger, kontinuierlicher, das heißt unterbrechungsfreier Applikation der Klebstoff-Ausgangskomponente (12) erfolgt.

## Claims

1. Joining method for producing a component connection, in which joining method the parts to be joined (1, 5) are joined together by way of an adhesive seam (3) which has at least one adhesive characteristic value, that is to say ductility or stiffness, the magnitude of which varies over an adhesive seam application length (1) in dependence on varying requirements, wherein a liquid or paste-like adhesive starting component (12) is applied to at least one part to be joined (1, 5) over the application length (1) by means of an applicator unit, **characterized in that** the applicator unit comprises an adhesive reservoir (11) for the adhesive starting component (12) and, separately therefrom, at least one additive reservoir (9, 28), wherein the adhesive starting component (12) is suitable already in its own right, at least after curing, for being able to provide a long-lasting component connection which is produced by adhesive bonding and wherein the reservoirs (11, 9, 28) are connected in terms of flow via a feed line system with an applicator nozzle (13) for applying the adhesive, and **in that** the feed line system comprises an additive metering unit (23), by means of which the additive (10) can be metered into the adhesive starting component (12) conducted to the applicator nozzle (13), and **in that** the additive metering unit (23) and the adhesive metering unit (21) are incorporated as actuating elements in a control loop (S), and **in that** the metering unit (21, 23) can be actuated automatically via an electronic control unit (27) in order to vary the adhesive characteristic value over the application length (1) of the adhesive seam (3) during the application operation by varying the proportion of additive in the adhesive starting component (12).

2. Joining method according to Claim 1, **characterized in that** the chemical composition of the adhesive starting component (12) is constant over the application length (1) of the adhesive seam (3).

3. Joining method according to Claim 1 or 2, **characterized in that** the proportion of additive along the adhesive seam (3) varies in jumps by at least 0.5% by weight based on the total weight of adhesive starting component (12) and proportion of additive.

4. Joining method according to one of the preceding claims, **characterized in that** a setpoint adhesive seam (4) having at least one adhesive seam property jump along the application length 1 is stored in the control unit (27), and **in that** the actual position of the applicator nozzle (13) for applying the adhesive seam (3) is detected and is compared with the setpoint adhesive seam (4) in the control unit (27), and **in that** the metering unit (21, 23) is actuated temporarily before the applicator nozzle (13) reaches the property jump.

5. Joining method according to one of the preceding claims, **characterized in that** at least two additive reservoirs (9, 28) comprising different additives (10, 29) are provided, wherein the additives (10, 29) are selected from the group of
- flexibilizers or strengtheners
- an electrically conductive substance
- blowing agents
- adhesion promoters.

6. Joining method according to one of the preceding claims, **characterized in that** the additive reservoir (9, 28) contains a proportion of additive of at least 5% by weight, particularly preferably of at least 10% by weight, wherein the adhesive starting component (12) provides the remaining proportion by weight as carrier component of the additive.

7. Joining method according to one of the preceding claims, **characterized in that** the adhesive starting component (12) in the adhesive reservoir (11) is present in the form of granular material.

8. Joining method according to Claim 1, **characterized in that** the feed line system comprises additive and adhesive sub-lines (15, 17, 32) which lead away from the additive reservoir (9, 28) and from the adhesive reservoir (11) and which merge at a node point (K) and lead into a main line (19) which is conducted to the applicator nozzle (13), and **in that** the additive metering unit (23, 32) is arranged in the additive sub-line (15, 32).

9. Joining method according to one of the preceding claims, **characterized in that** the feed line system comprises an adhesive metering unit (21) for metering the adhesive starting component (12), and **in that** in particular the adhesive metering unit (21) is arranged in the adhesive sub-line (17).

10. Joining method according to one of the preceding claims, **characterized in that** the feed line system comprises a dynamic mixer (25), in which the metered-in additive (10) and the adhesive starting component (12) are mixed, and **in that** in particular the dynamic mixer (25) is arranged in the main line (19).

11. Joining method according to one of the preceding claims, **characterized in that** the adhesive starting component (12) is a 1-component system which is thermally or chemically activatable.

12. Joining method according to one of the preceding claims, **characterized in that** the adhesive seam (3) extends continually and without interruption over the application length (1), and/or **in that** the application operation over the application length (1) is carried out with continual, continuous, that is to say interruption-free, application of the adhesive starting component (12).

## Revendications

1. Procédé de jointoyage pour la création d'une liaison de composants, selon lequel les partenaires de jointoyage (1, 5) sont assemblés au niveau d'un joint de collage (3), qui présente au moins une valeur caractéristique d'adhésif, c'est-à-dire une ductilité ou une rigidité, dont la grandeur varie sur une longueur d'application de joint de collage (1) en fonction d'exigences variables, un composant initial d'adhésif liquide ou pâteux (12) étant appliqué au moyen d'une unité d'application sur au moins un partenaire de jointoyage (1, 5) sur la longueur d'application (1), **caractérisé en ce que** l'unité d'application comprend un réservoir d'adhésif (11) pour le composant initial d'adhésif (12) et, séparément de celui-ci, au moins un réservoir d'additif (9, 28), le composant initial d'adhésif (12) étant déjà approprié à lui-seul pour pouvoir produire au moins après le durcissement une liaison de composants durable générée par collage, et les réservoirs (11, 9, 28) étant reliés fluidiquement par l'intermédiaire d'un système de conduites d'alimentation avec une buse d'application (13) pour l'application de l'adhésif, et **en ce que** le système de conduites d'alimentation comprend une unité de dosage d'additif (23), au moyen de laquelle l'additif (10) peut être additionné de façon dosée au composant initial d'adhésif (12) acheminé vers la buse d'application (13), et **en ce que** l'unité de dosage d'additif (23) et l'unité de dosage d'adhésif (21) sont reliées dans un circuit de régulation (S) en tant qu'organes de réglage, et **en ce que** l'unité de dosage (21, 23) peut être commandée automatiquement par l'intermédiaire d'une unité de pilotage électronique (27) pour la variation de la valeur caractéristique d'adhésif sur la longueur d'application (1) du joint de collage (3) pendant le processus d'application par la variation de la proportion d'additif dans le composant initial d'adhésif (12).

2. Procédé de jointoyage selon la revendication 1, **caractérisé en ce que** la composition chimique du composant initial d'adhésif (12) est constante sur la longueur d'application (1) du joint de collage (3).

3. Procédé de jointoyage selon la revendication 1 ou 2, **caractérisé en ce que** la proportion d'additif varie le long du joint de collage (3) en sauts d'au moins 0,5 % en poids par rapport au poids total du composant initial d'adhésif (12) et de la proportion d'additif.

4. Procédé de jointoyage selon l'une quelconque des revendications précédentes, **caractérisé en ce qu'**un joint de collage de consigne (4) muni d'au moins un saut de propriété de joint de collage le long de la longueur d'application 1 est enregistré dans l'unité de pilotage (27) et **en ce que** la position réelle de la buse d'application (13) pour le dépôt du joint de collage (3) est déterminée et comparée au joint de collage de consigne (4) dans l'unité de pilotage (27) et **en ce que** l'unité de dosage (21, 23) est commandée temporellement avant l'atteinte du saut de propriété par la buse d'application (13).

5. Procédé de jointoyage selon l'une quelconque des revendications précédentes, **caractérisé en ce qu'**au moins deux réservoirs d'additif (9, 28) avec différents additifs (10, 29) sont prévus, les additifs (10, 29) étant choisis dans le groupe
- des flexibilisants ou augmentateurs de solidité,
- des substances électriquement conductrices,
- des agents propulseurs,
- des promoteurs d'adhésion.

6. Procédé de jointoyage selon l'une quelconque des revendications précédentes, **caractérisé en ce que** le réservoir d'additif (9, 28) contient une proportion d'additif d'au moins 5 % en poids, de manière particulièrement préférée d'au moins 10 % en poids, le composant initial d'adhésif (12) représentant la proportion en poids restante en tant que composant support de l'additif.

7. Procédé de jointoyage selon l'une quelconque des revendications précédentes, **caractérisé en ce que** le composant initial d'adhésif (12) se présente en tant que granulat dans le réservoir d'adhésif (11).

8. Procédé de jointoyage selon la revendication 1, **caractérisé en ce que** le système de conduites d'alimentation comprend des conduites partielles d'additif et d'adhésif (15, 17, 32) s'éloignant du réservoir d'additif (9, 28) et du réservoir d'adhésif (11), qui sont réunies au niveau d'un nœud (K) et débouchent dans une conduite principale (19), qui est acheminée vers la buse d'application (13), et **en ce que** l'unité de dosage d'additif (23, 32) est agencée dans la conduite partielle d'additif (15, 32).

9. Procédé de jointoyage selon l'une quelconque des revendications précédentes, **caractérisé en ce que** le système de conduites d'alimentation comprend une unité de dosage d'adhésif (21) pour le dosage du composant initial d'adhésif (12), et **en ce que** l'unité de dosage d'adhésif (21) est notamment agencée dans la conduite partielle d'adhésif (17).

10. Procédé de jointoyage selon l'une quelconque des revendications précédentes, **caractérisé en ce que** le système de conduites d'alimentation comprend un mélangeur dynamique (25), dans lequel l'additif additionné de façon dosée (10) et le composant initial d'adhésif (12) sont mélangés, et **en ce que** le mélangeur dynamique (25) est notamment agencé dans la conduite principale (19).

11. Procédé de jointoyage selon l'une quelconque des revendications précédentes, **caractérisé en ce que** le composant initial d'adhésif (12) est un système monocomposant, qui est activable thermiquement ou chimiquement.

12. Procédé de jointoyage selon l'une quelconque des revendications précédentes, **caractérisé en ce que** le joint de collage (3) s'étend sur la longueur d'application (1) de manière constante et sans interruption, et/ou **en ce que** le processus d'application a lieu sur la longueur d'application (1) avec une application constante, continue, c'est-à-dire sans interruption, du composant initial d'adhésif (12).
